# EUROPÄISCHE PATENTSCHRIFT

(11) **EP 1 335 142 B1**
(45) Veröffentlichungstag und Bekanntmachung des Hinweises auf die Patenterteilung: **29.12.2004**
(21) Anmeldenummer: 03001843.6
(22) Anmeldetag: 29.01.2003
(51) Int. Cl.: F16B 39/24, F16B 31/02

(54) **Lösbares Verbindungselement für ein Bauteil mit einem Schraubteil und einem Sicherungsring**
Releasable fastening means with a screw element and a locking washer
Dispositif de fixation amovible comprenant un élément de vissage et une rondelle de blocage

(30) Priorität: 08.02.2002 DE 10205300
(43) Veröffentlichungstag der Anmeldung: 13.08.2003
(73) Patentinhaber: Kamax-Werke Rudolf Kellermann GmbH & Co. KG, 37520 Osterode am Harz (DE)
(72) Erfinder: Hartmann, Gunther, 36304 Alsfeld (DE); Sommer, Wolfgang, 35285 Gemünden (Wohra) (DE); Wagner, Frank, 35418 Grossen Buseck (DE)
(74) Vertreter: Patentanwälte Rehberg + Hüppe

(56) Entgegenhaltungen:
- CH-A- 129 964
- US-A- 3 263 727
- US-A- 5 474 409
- US-A- 5 967 724

## Beschreibung

Die Erfindung betrifft ein lösbares Verbindungselement für ein Bauteil, mit einem Schraubteil, insbesondere einer Radschraube, und einem Sicherungsring und den im Oberbegriff des Anspruchs 1 angegebenen Merkmalen. Die Erfindung lässt sich allgemein bei der Verbindung von Bauteilen anwenden. Sie kann insbesondere auch in Verbindung mit einer Radschraube oder Radmutter eingesetzt werden, bei der also die Radschraube oder Radmutter das Schraubteil darstellt, denen dann ebenfalls jeweils ein Sicherungsring zugeordnet ist. Der Sicherungsring ist in aller Regel, insbesondere zur Erleichterung der Montage, unverlierbar mit dem Schraubteil verbunden. Die Verbindung ist so gestaltet, dass sich der Sicherungsring nicht nur relativ zum Schraubteil verdrehen kann, sondern dass im Rahmen eines vorgesehenen Bewegungsspiels ein radialer Versatz der Achsen gegeneinander mög lich ist. Dies beschränkt sich freilich auf einen engen Bereich, wie er beispielsweise zum Ausgleich von Teilungsfehlern der Durchbrechungen der Radschüssel und/oder der Nabe sinnvoll ist.

Ein lösbares Verbindungselement der eingangs beschriebenen Art ist aus der US 3,263,727 bekannt. Das Verbindungselement ist in einer ersten Ausführungsform dreiteilig ausgebildet, wobei zwei Federringe einem als Schraube ausgebildeten Schraubteil zugeordnet sind. Es ist aber auch eine weitere Ausführungsform gezeigt, bei der der eine Federring in das Schraubteil integriert ist. Der andere Federring bildet dann einen Sicherungsring eines dann insgesamt zweiteiligen Verbindungselements. Das Schraubteil weist eine Schlüsselangriffsfläche, einen Gewindeabschnitt und eine Abstützfläche zur Übertragung einer Axialkraft auf den Sicherungsring auf. Der Sicherungsring besitzt eine Gegenabstützfläche und eine Anlagefläche für die Übertragung der Axialkraft auf das Bauteil. Das Schraubteil weist auf seiner dem Sicherungsring zugekehrten Abstützfläche eine erste Keilflächenverzahnung und der Sicherungsring auf der dem Schraubteil zugekehrten Gegenabstützfläche eine korrespondierende zweite Keilflächenverzahnung auf. Die Keilflächenverzahnungen bilden Aufgleitflächen, die in Losdrehrichtung des Schraubteils relativ zum Sicherungsring unter Erhöhung der Axialkraft in dem Verbindungselement aufeinander aufgleiten und so eine Sicherungswirkung erbringen. Die Steigung der Aufgleitflächen ist größer als die Steigung des Gewindes im Gewindeabschnitt des Schraubteils. Die in Losdrehrichtung wirksamen Aufgleitflächen gehen unter Bildung von Schultern ineinander über. Diese Schulter erstrecken sich in Achsrichtung und wirken damit als formschlüssige Anschläge in Festdrehrichtung. Die Schultern sind also so ausgebildet, dass beim Anziehen des Verbindungselements durch Einleiten eines Drehmoments in das Schraubteil in Festdrehrichtung der Sicherungsring mitgenommen wird. Beim Lösen des Schraubteils sollen die Aufgleitflächen der Keilflächenverzahnungen überrasten bzw. überspringen, ohne dass die Fließgrenze des Materials überschritten wird. Durch dieses Überrasten oder Überspringen tritt an den Keilflächenverzahnungen ein erheblicher Verschleiß auf, so dass das Verbindungselement nicht wiederverwendbar ist.

Ein lösbares Verbindungselement für ein Fahrzeugrad, also eine Radschraube, ist aus der DE 100 34 748 A1 bekannt. Die Radschraube weist einen Schraubteil und einen Stützring auf, so dass dann insgesamt ein zweiteiliges Verbindungselement vorliegt. Das Schraubteil weist eine Schlüsselangriffsfläche, einen Gewindeabschnitt und eine Abstützfläche zur Übertragung einer Axialkraft auf den Stützring auf. Der Stützring besitzt eine Gegenabstützfläche und eine Anlagefläche für die Übertragung der Axialkraft auf das Fahrzeugrad. Das Schraubteil weist auf seiner dem Stützring zugekehrten Abstützfläche eine erste Keilflächenverzahnung und der Stützring auf der dem Schraubteil zugekehrten Gegenabstützfläche eine korrespondierende zweite Keilflächenverzahnung auf. Die Keilflächenverzahnungen bilden Aufgleitflächen, die in Losdrehrichtung des Schraubteils relativ zum Stützring unter Erhöhung der Axialkraft in dem Verbindungselement aufeinander aufgleiten und so eine Sicherungswirkung erbringen. Die Steigung der Aufgleitflächen ist größer als die Steigung des Gewindes im Gewindeabschnitt des Schraubteils. Die in Losdrehrichtung wirksamen Aufgleitflächen gehen unter Bildung von Schultern ineinander über. Diese Schulter erstrecken sich in Achsrichtung und wirken damit als formschlüssige Anschläge in Festdrehrichtung. Die Schultern sind also so ausgebildet, dass beim Anziehen des Verbindungselements durch Einleiten eines Drehmoments in das Schraubteil in Festdrehrichtung der Stützring mitgenommen wird. Beim Lösen des Schraubteils besteht die Gefahr, dass die Aufgleitflächen der Keilflächenverzahnungen überrasten bzw. überspringen können, wobei die Fließgrenze des Materials überschritten werden kann.

Ein weiteres lösbares Verbindungselement der eingangs beschriebenen Art ist aus der PCT-Anmeldung mit der Veröffentlichungsnummer WO 92/14939 bekannt. Es wird ein zweiteiliges Verbindungselement mit einem Schraubteil und einem Sicherungsring beschrieben. Das Schraubteil ist als Mutter ausgebildet, besitzt also keinen Schaft. Das Schraubteil weist eine erste Schlüsselangriffsfläche, einen Gewindeabschnitt und eine Abstützfläche zur Übertragung einer Axialkraft auf den Sicherungsring auf. Der Sicherungsring besitzt eine zweite Schlüsselangriffsfläche, eine Gegenabstützfläche und eine Anlagefläche für die Übertragung der Axialkraft auf das Bauteil. Das Schraubteil weist auf seiner dem Sicherungsring zugekehrten Abstützfläche eine erste Keilflächenverzahnung und der Sicherungsring auf der dem Schraubteil zugekehrten Gegenabstützfläche eine korrespondierende zweite Keilflächenverzahnung auf. Die Keilflächenverzahnungen bilden Aufgleitflächen, die in Losdrehrichtung unter Erhöhung der Axialkraft in dem Verbindungselement aufeinander aufgleiten und so eine Sicherungswirkung erbringen. Die Steigung der Aufgleitflächen ist größer als die Steigung des Gewindes im Gewindeabschnitt des Schraubteils. Die in Los-drehrichtung wirksamen Aufgleitflächen gehen unter Bildung von Schultern ineinander über. Diese Schulter besitzen eine vergleichsweise sehr viel größere Schräglage und wirken damit als formschlüssige Anschläge. Die Schultern sind also so ausgebildet, dass beim Anziehen des Verbindungselements durch Einleiten eines Drehmoments in das Schraubteil in Festdrehrichtung der Sicherungsring mitgenommen wird. Das bewusste Lösen des Verbindungselements erfolgt durch gleichzeitigen gleichförmigen Drehmomentangriff auf die beiden Schlüsselangriffsflächen an dem Schraubteil und an dem Sicherungsring. Diese Handhabung bereitet Schwierigkeiten und ist durch die Anordnung der beiden Schlüsselangriffsflächen nicht zwingend vorgegeben. In der Regel fluchten die beiden Schlüsselangriffsflächen vor dem Lösen auch nicht miteinander, so dass Fehlbedienungen auftreten können. Wird ein Lösevorgang nur durch Drehmomentangriff an dem Schraubteil durchgeführt, dann erhöht sich bei einer fortgesetzten oder erstmals initiierten Aufgleitbewegung die Axialkraft im Schraubteil und im Sicherungsring, so dass der Lösevorgang erschwert wird. Es findet zwangsläufig ein Überrasten an den beiden Keilflächenverzahnungen statt. Dadurch tritt Verschleiß an den Keilflächenverzahnungen auf, der die Wiederverwendbarkeit beeinträchtigt.

In der Regel werden die beiden Schlüsselangriffsflächen auch beim Anziehen nicht fluchten. Eine Fehlbedienung kann insbesondere dann nicht ausgeschlossen werden, wenn es handelsübliche Werkzeuge gibt, die zur vereinfachten Handhabung mit einer z.B. doppelten Teilung der Schlüsselflächen angeboten werden. Ein Vorteil dieser Werkzeuge ist, dass zur Ausrichtung des Werkzeugs auf die Schlüsselfläche der Schraube maximal der halbe Drehwinkel gegenüber einem konventionellen Werkzeug verdreht werden muß. Bei Verwendung solcher Werkzeuge mit dem im Stand der Technik beschriebenen Ausführungsbeispiel kann es vorkommen, dass Schraubteil und Stützring in verdrehter Relativlage angezogen werden. Unter der anschließenden Betriebsbelastung wird sich die Verbindung in die durch die Anschlagflächen vorgegebene Nulllage zurückdrehen. Dabei kommt es zu einem unerwünschten Vorspannkraftverlust. Außerdem steht im Vergleich zu einer funktionsgerecht angezogenen Verbindung mit zuvor ausgerichteten Schlüsselflächen praktisch nur noch der halbe Aufgleitweg zur Verfügung.

Aus der US-A-5,967,724 und der US-A-5,474,409 ist ein lösbares Verbindungselement für ein Bauteil bekannt, welches aus einem Schraubteil und einem Sicherungsring besteht. Das Schraubteil weist eine Schlüsselangriffsfläche, einen Gewindeabschnitt und eine Abstützfläche zur Übertragung einer Axialkraft auf den Sicherungsring auf. Der Sicherungsring besitzt eine Gegenabstützfläche und eine Anlagefläche für die Übertragung der Axialkraft auf das Bauteil. Das Schraubteil ist auf seiner dem Sicherungsring zugekehrten Abstützfläche mit einer ersten Keilflächenverzahnung versehen. Der Sicherungsring ist auf der dem Schraubteil zugekehrten Gegenabstützfläche mit einer korrespondierenden zweiten Keilflächenverzahnung versehen. Beide Keilflächenverzahnungen bilden miteinander Aufgleitflächen und ermöglichen in Losdrehrichtung ein Aufgleiten aufeinander unter Erhöhung der Axialkraft in dem Verbindungselement. Zwischen den Keilflächen sind Schultern vorgesehen. Die Schultern sind an dem Schraubteil einerseits und an dem Sicherungsring andererseits so relativ zueinander positioniert, dass bei Anordnung von sechs Keilflächen auf jedem Element Schraubteil und Sicherungsring im Bereich der Schultern in einem Winkel von 30° gegeneinander verdreht sind. Darüber hinaus ist der Sicherungsring mit federnden Fingern versehen, an denen beispielsweise die Schlüsselangriffsfläche des Schraubteils zur Anlage kommt. Diese federnden Finger erbringen keine Anschlagfunktion und dienen auch nicht der Übertragung eines Drehmomentes von dem Schraubteil auf den Sicherungsring, sondern sie dienen als Kraftspeicher zur Unterbringung einer Rückdrehkraft, die in Losdrehrichtung auf das Schraubteil einwirkt. Wenn das Schraubteil durch Aufbringen eines in Anziehrichtung wirkenden Drehmomentes und unter Ausbildung einer Axialkraft im Schraubteil angezogen wird, wird gegen Ende dieser Festziehbewegung in den federnden Finger eine Rückstellkraft abgespeichert, die nach dem Absetzen des Anziehwerkzeugs von dem Schraubteil bestrebt ist, das Schraubteil gegenüber dem Sicherungsring in Losdrehrichtung zu verdrehen. Dies bedeutet, dass diese gespeicherte Kraft in der gleichen Richtung auf das Schraubteil einwirkt wie die Kräfte, die bei Belastung in Losdrehrichtung wirken. Wenn ein solches Verbindungselement definitiv gelöst werden soll, muss ein entsprechendes Drehmoment auf die Schlüsselangriffsfläche des Schraubteils zur Einwirkung gebracht werden. Dabei besteht die Gefahr, dass die nachgiebigen elastischen Finger aufbiegen oder auch plastisch verformt werden, so dass die Keilflächenverzahnungen zwischen Schraubteil und Sicherungsring überspringen. Der dadurch auftretende Verschleiß beeinträchtigt die Wiederverwendbarkeit eines solchen Verbindungselements. Die federnden Finger erfüllen beim gewollten Lösen des Verbindungselements, nämlich bei einer Drehmomentübertragung in Losdrehrichtung, keine nennenswerte Funktion. Sie behindern allenfalls das Losdrehen temporär.

Der Erfindung liegt die Aufgabe zugrunde, ein lösbares Verbindungselement der eingangs beschriebenen Art bereitzustellen, welches eine Sicherungswirkung für das Schraubteil in Losdrehrichtung erbringt, wenn bei Belastung in Losdrehrichtung wirkende Kräfte über das Schraubteil einwirken. Das lösbare Verbindungselement soll aus möglichst wenig Einzelteilen bestehen, eine einfache und sichere Montage und Demontage ermöglichen und schließlich die Bedingungen der Mehrfachverwendbarkeit erfüllen.

Erfindungsgemäß wird dies bei dem lösbaren Verbindungselement der eingangs beschriebenen Art dadurch erreicht, dass zwischen Schraubteil und Sicherungsring auch ein zweites Anschlagflächenpaar zur Drehmomentübertragung in Losdrehrichtung vorgesehen ist, und dass die Anschlagflächenpaare mit Spiel zueinander so positioniert sind, dass zwischen ihnen das Aufgleiten über die Keilflächenverzahnungen ohne Überrasten der Keilflächenverzahnungen ermöglicht wird.

Die Erfindung geht von dem Gedanken aus, die bisher bekannten lösbaren Verbindungselemente in Form von Kopfschrauben oder Muttern, jeweils mit Stützring, zu verbessern, ohne die Anzahl der Teile zu vergrößern. Die Anwendung der Keilflächenverzahnungen erbringt eine Erhöhung der Axialkraft beim selbsttätigen Lösen, wirkt also dem Lösen bei erhöhten Beanspruchungen entgegen. Querkräfte z.B., die bei entsprechender Belastung auf die Elemente des Verbindungselements einwirken, führen durch das Aufgleiten der beiden Keilflächenverzahnungen aufeinander unter Erhöhung der Axialkraft zu einer Beendigung der Lösebewegung und wirken so einem weiteren Abfall der Vorspannkraft entgegen. Dabei findet nur eine sehr begrenzte Relativbewegung statt. Jeder Tendenz der Relativbewegung wird entgegengewirkt. Dies wird bei mehrfach auftretenden, auch unterschiedlich hohen Belastungen mehrfach so auftreten bzw. wirken. Dies gilt beim selbsttätigen Lösen. Daraus resultiert vorteilhaft ein Ausgleich von Vorspannkraftverlusten. Dies gilt insbesondere dann, wenn die Vorspannkraft durch unvermeidliche Setzerscheinungen bereits verringert und damit der durch Reibschluss zwischen den verspannten Teilen übertragbare Anteil der Querkraft vermindert wurde. Ein ähnlicher Fall liegt vor, wenn die Verbindung z. B. durch unsachgemäße Montage oder Wartung nicht mit dem üblicherweise vorgeschriebenen Drehmoment angezogen und damit das für eine sichere Verbindung erforderliche Vorspannkraftniveau nicht erreicht wurde. Insofern stellt die Erfindung auch einen Beitrag zur Erhöhung der Sicherheit dar.

Wesentlich ist in Verbindung damit, dass zwischen Schraubteil und Sicherungsring zwei Anschlagflächenpaare vorgesehen sind, von denen das eine zur Drehmomentübertragung in Festdrehrichtung und das andere Anschlagflächenpaar zur Drehmomentübertragung in Losdrehrichtung ausgebildet und vorgesehen ist. Dabei sind die Anschlagflächenpaare mit Spiel bzw. mit Drehwinkelabstand zueinander angeordnet und relativ zu den Keilflächenverzahnungen positioniert. Dieses Spiel bzw. dieser Wirkabstand wird genutzt, um das Aufgleiten der Aufgleitflächen der Keilflächenverzahnungen ohne Überrasten der Keilflächenverzahnungen zu ermöglichen. Das Aufgleiten wird also nur begrenzt zugelassen, wobei der Aufgleitweg in Umfangsrichtung kleiner ist als die Teilung der Keilflächenverzahnungen. Es muß mindestens ein in Festdrehrichtung wirksames Anschlagflächenpaar und mindestens ein in Losdrehrichtung wirksames Anschlagflächenpaar je an einer Stelle des Umfangs vorgesehen sein.

Die relative Zuordnung zwischen den Keilflächenverzahnungen und den Anschlagflächenpaaren ist so getroffen, dass das in Festdrehrichtung wirksame Anschlagflächenpaar die Relativlage der Aufgleitflächen der Keilflächenverzahnungen in der maximal angenäherten Drehstellung zwischen Schraubteil und Sicherungsring bestimmt. Damit findet an den Aufgleitflächen der Keilflächenverzahnungen während des Festziehens keine Gleitreibung statt. Der maximal nutzbare Aufgleitweg wird eingestellt. Das in Losdrehrichtung wirksame Anschlagflächenpaar kommt erst dann zur Einwirkung, wenn ein Teil des Aufgleitwegs bzw. dessen Projektion überschritten wurde.

Dies wird durch Drehmomentangriff an der einzigen Schlüsselangriffsfläche in Losdrehrichtung erreicht. Da nur eine Schlüsselangriffsfläche vorhanden ist, ist eine sinnfällige richtige Betätigung des Verbindungselements sowohl beim Festziehen als auch beim Lösen vorgegeben.

Durch die Aufteilung der ersten Keilflächenverzahnung auf das Schraubteil, also z.B. eine Kopfschraube, eine Radschraube bzw. Radmutter, und der zweiten Keilflächenverzahnung auf den Sicherungsring erhöht sich die Anzahl der verwendeten Teile nicht. Auch die Anzahl der Setzfugen bleibt im Vergleich zu bekannten Verbindungselementen gleich, so dass mit erhöhten Setzbeträgen nicht zu rechnen ist.

Die beiden Keilflächenverzahnungen sind so ausgebildet und angeordnet, dass bei Krafteinwirkung auf das Schraubteil in Losdrehrichtung des Verbindungselementes zwischen Schraubteil und Sicherungsring eine dem selbsttätigen Lösen entgegengerichtete Sicherungswirkung entsteht, wobei das Schraubteil und der Sicherungsring unter Erhöhung der Axialkraft begrenzt auseinandergedreht werden, während beim Anziehen des Schraubteils und beim Losdrehen des Schraubteils die jeweiligen Anschlagflächenpaare zwischen Schraubteil und Sicherungsring Formschluss haben. Die Begrenzung der Auseinanderdrehung in Losdrehrichtung findet immer innerhalb der Projektion einer Aufgleitfläche statt. Das Festziehen und das Lösen belastet die Anschlagflächenpaare.

Für die Realisierung der Anschlagflächenpaare bieten sich dem Fachmann verschiedene Möglichkeiten. So können die Anschlagflächenpaare in Form einer Klauenkupplung oder einer Keilwellenverzahnung ausgebildet sein. Aber auch sonstige Ausbildungen sind möglich. Die Anzahl der Keilflächen der Keilflächenverzahnungen und die Anzahl der Anschlagflächenpaare kann gleich oder auch sehr unterschiedlich sein. Die Keilflächen sollten gleichmäßig über den Umfang verteilt angeordnet sein. Die Anschlagflächenpaare müssen nicht unbedingt gleichmäßig über den Umfang verteilt angeordnet sein.

Es besteht die Möglichkeit, dass die eingerückte Relativlage zwischen Schraubteil und Sicherungsring durch eine unverlierbare und auf das Spiel begrenzte drehbare Lagerung des Sicherungsrings an dem Schraubteil gesichert ist. Die Kupplung bzw. Verzahnung ist gleichsam immer im Eingriff. Dadurch wird die Ausgangsrelativlage zwischen Schraubteil und Sicherungsring bestimmt. Beim Festziehen gleiten die Aufgleitflächen zunächst so aufeinander, dass Schraubteil und Sicherungsring in axialer Richtung einander maximal nahe kommen. Damit kann zugleich der Anfang des Aufgleitweges festgelegt bzw. erreicht sein. Wenn der von den Keilflächenverzahnungen gebildete Aufgleitweg unmittelbar an dem in Festdrehrichtung wirksamen Anschlagflächenpaar beginnt, wird der konstruktiv so festgelegte mögliche Aufgleitweg optimal genutzt. Beim Lösen gleiten die Aufgleitflächen an dem Schraubteil und an dem Sicherungsring ebenfalls aufeinander, ein Überrasten bzw. Überspringen wird jedoch mit Sicherheit vermieden.

Sinnvoll ist es, wenn das Spiel zwischen den Anschlagflächenpaaren in Umfangsrichtung kleiner als der Weg der Projektion der Keilflächenverzahnungen bemessen ist und die Anschlagflächenpaare so relativ zu den Keilflächenverzahnungen angeordnet sind, dass das Spiel innerhalb des Weges der Projektion einer Keilfläche auf den Umfang liegt. Wenn das Spiel zwischen den Anschlagflächenpaaren in Umfangsrichtung so relativ zu der Projektion des Aufgleitweges der Keilflächenverzahnungen angeordnet und positioniert ist, dass es jeweils mit einem Abstand zu den Enden des theoretischen projizierten Aufgleitweges liegt, ist sichergestellt, dass das Anziehen und das Lösen des Schraubteils über das jeweilige Anschlagflächenpaar erfolgt. Die zwischen den Aufgleitflächen möglicherweise angeordneten Schultern kommen nicht zur Anlage und erfüllen keine Wirkung. Die Schultern können somit unter Zulassung relativ großer Toleranzen hergestellt werden. Andererseits wird aber auch ein Überrasten oder Überspringen der Keilflächenverzahnungen beim Lösen mit Sicherheit vermieden.

Es ist auch möglich, dass die Schultern das in Festdrehrichtung wirksame Anschlagflächenpaar bilden und dort die Anlage beim Anziehen erfolgt. Dann ist es sinnvoll, dass das Spiel zwischen den Anschlagflächenpaaren gleich oder größer als die Projektion der Keilflächenverzahnungen bemessen ist und dass die Anschlagflächenpaare so relativ zu den Keilflächenverzahnungen angeordnet sind, dass das Spiel außerhalb der Projektion einer Keilfläche liegt. Dies stellt eine Möglichkeit dar, den tatsächlichen Aufgleitweg zu begrenzen bzw. klein zu machen. Gleichzeitig können größere Toleranzen für das in Festdrehrichtung nicht tatsächlich wirksame Anschlagflächenpaar zugelassen bzw. dieses Anschlagflächenpaar weggelassen werden.

Die Aufgleitflächen der Keilflächenverzahnungen können als ebene Flächen ausgebildet sein. Besser ist es, wenn die Keilflächenverzahnungen nicht-ebene Formflächen aufweisen und der wirksame Tangentenwinkel der in Losdrehrichtung des Schraubteils miteinander in Kontakt kommenden Formflächen der Keilflächenverzahnungen nur geringfügig größer als der Steigungswinkel des Gewindeabschnitts bemessen ist. Die nicht-ebenen Formflächen können gewindegangartig ausgebildet sein und somit immer eine flächige Anlage erbringen. Die Formflächen können auch in dem Sinne nicht-eben ausgebildet sein, dass der Neigungswinkel ihrer Anordnung über den Aufgleitweg variiert.

Die Anschlagflächenpaare und die Keilflächenverzahnungen können auf der Abstützfläche des Schraubteils und der Gegenabstützfläche des Sicherungsrings über den Umfang gleichmäßig verteilt angeordnet sein. Dies stellt eine bevorzugte Ausführungsform dar. Die Keilflächen der Keilflächenverzahnungen können dabei am Grund von Vertiefungen im Schraubteil oder am Grund von Vertiefungen im Sicherungsring angeordnet sein. Die Anschlagflächenpaare und die Keilflächenverzahnungen können in Umfangsrichtung mit und ohne radialen Versatz abwechselnd hintereinander angeordnet sein.

Die Keilflächenverzahnungen sind immer auf solchen Flächen angeordnet, die sich radial zu der Achse des Verbindungselements erstrecken. Die Anschlagflächen der Anschlagflächenpaare können dagegen entweder auf Bereichen der Abstützfläche und der Gegenabstützfläche oder auf sich axial erstreckenden Bereichen des Schraubteils und des Sicherungsrings angeordnet sein. Damit können z.B. sich radial zu der Achse des Verbindungselements erstreckende Flächen ganz und nur für die Anordnung der Keilflächenverzahnungen genutzt werden.

Die Erfindung wird anhand verschiedener Ausführungsbeispiele weiter erläutert und beschrieben. Es zeigen:
- Fig. 1: eine Seitenansicht eines Schraubteils,
- Fig. 2: eine Seitenansicht eines zugehörigen Sicherungsrings,
- Fig. 3: eine Draufsicht auf den Sicherungsring gemäß Fig. 2,
- Fig. 4: eine Seitenansicht des Verbindungselementes aus Schraubteil und Sicherungsring,
- Fig. 5: eine Detaildarstellung gemäß der Angabe der Fig. 4,
- Fig. 6: eine Seitenansicht eines Schraubteils in einer zweiten Ausführungsform,
- Fig. 7: eine Seitenansicht eines Sicherungsrings, abgestimmt auf das Schraubteil gemäß Fig. 6,
- Fig. 8: einen vergrößerten Ausschnitt aus dem Verbindungselement bestehend aus dem Schraubteil der Fig. 6 und dem Sicherungsring der Fig. 7,
- Fig. 9: eine Ansicht eines Sicherungsrings in einer weiteren Ausführungsform,
- Fig. 10: eine vergrößernde Detaildarstellung eines Schraubteils ähnlich Fig. 6 in Verbindung mit dem Sicherungsring gemäß Fig. 9,
- Fig. 11: eine Seitenansicht eines Schraubteils in einer weiteren Ausführungsform,
- Fig. 12: eine Seitenansicht eines Sicherungsrings in einer weiteren Ausführungsform,
- Fig. 13: eine Draufsicht auf den Sicherungsring gemäß Fig. 12,
- Fig. 14: eine Seitenansicht des Schraubteils gemäß Fig. 11 und des Sicherungsrings gemäß Fig. 12,
- Fig. 15: eine vergrößerte Darstellung gemäß der Angabe in Fig. 14,
- Fig. 16: eine isometrische Darstellung eines Schraubteils in einer weiteren Ausführungsform,
- Fig. 17: eine isometrische Darstellung des zu dem Schraubteil gemäß Fig. 16 gehörenden Sicherungsrings,
- Fig. 18: eine isometrische Darstellung des Schraubteils gemäß Fig. 16 und des Sicherungsrings gemäß Fig. 17 in zusammengefügtem Zustand,
- Fig. 19: eine Seitenansicht einer weiteren Ausführungsform des Schraubteils,
- Fig. 20: eine Draufsicht auf einen Sicherungsring, der zu dem Schraubteil gemäß Fig. 19 gehört,
- Fig. 21: eine Abwicklung des Sicherungsrings mit Darstellung der prinzipiellen Lage des Spiels der Klauenkupplung, und
- Fig. 22: eine teilweise geschnittene Darstellung eines Verbindungselementes aus Mutter und Sicherungsring.

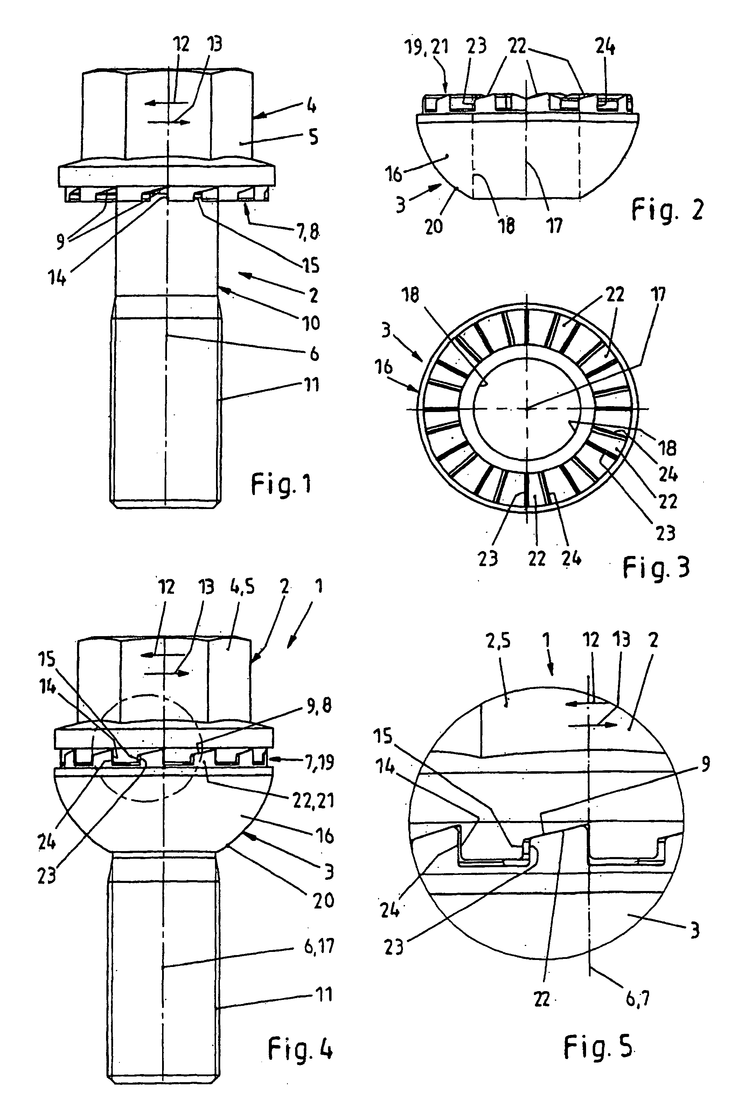

In den Fig. 1-5 ist eine erste Ausführungsform des Verbindungselementes 1 dargestellt. Das Verbindungselement 1 weist zwei wesentliche Bestandteile auf, nämlich ein Schraubteil 2 (Fig. 1) und einen Sicherungsring 3 (Fig. 2 und 3). Das in Fig. 1 dargestellte Schraubteil 2 ist generell als Schraube ausgebildet, kann aber auch grundsätzlich in Form einer Mutter realisiert werden. Das Schraubteil 2 weist einen Kopf 4 auf, an dem eine Schlüsselangriffsfläche 5 verwirklicht ist. Das Schraubteil 2 besitzt eine Achse 6. Auf der Unterseite des Kopfes 4 ist eine Abstützfläche 7 verwirklicht, mit deren Hilfe das Schraubteil 2 auf dem Sicherungsring 3 aufliegt und über die die Axialkraft des Schraubteils 2 auf den Sicherungsring und dann weiter auf das Bauteil (nicht dargestellt) übertragen wird.

Im Bereich der Abstützfläche 7 ist eine Keilflächenverzahnung 8 vorgesehen, die in Vertiefungen angeordnete Keilflächen 9 aufweist. Bei den Keilflächen 9 handelt es sich um in der dargestellten Weise geneigt angeordnete Flächen, die radial zu der Achse 6 über die Abstützfläche 7 durchgehen. Die Neigung dieser Keilflächen 9 ist auch auf die Drehrichtung des Schraubteils 2 abgestimmt und angeordnet. Das Schraubteil 2 weist einen Schaft 10 mit einem Gewindeabschnitt 11 auf. Wenn es sich bei dem Schraubteil 2 um eine Schraube handelt, bei der das Gewinde des Gewindeabschnitts 11 in einem solchen Drehsinn angeordnet ist, wie dies generell üblich ist, lässt sich das Schraubteil 2 durch Verdrehen im Rechtsdrehsinn, also in Festdrehrichtung 12, anziehen. Die umgekehrte Drehrichtung, nämlich die Losdrehrichtung 13, dient dann dem Lösen bzw. Losdrehen des Schraubteils 2 relativ zu einem nicht dargestellten Bauteil.

An der Abstützfläche 7 sind jedoch nicht nur die Keilflächen 9 der Keilflächenverzahnung 8 ausgebildet und angeordnet, sondern zusätzlich noch zwei Anschlagflächen 14 und 15. Die Anschlagfläche 14 ist der Festdrehrichtung 12 zugeordnet und erfüllt ihre Wirkung beim Anziehen des Schraubteils 2. Die Anschlagfläche 15 ist der Losdrehrichtung 13 zugeordnet und erfüllt ihre Wirkung beim Losdrehen des Schraubteils 2. Die Keilflächen 9 und die Anschlagflächen 14 und 15 sind in der dargestellten Weise über den Umfang der Abstützfläche 7 gleichmäßig verteilt angeordnet. Die Abstützfläche 7 weist somit eine übereinstimmende Anzahl von Keilflächen 9, Anschlagflächen 14 und Anschlagflächen 15 auf.

Der zu dem Schraubteil 2 gemäß Fig. 1 gehörige Sicherungsring 3 ist in den Fig. 2 und 3 dargestellt. Es handelt sich um einen ringförmigen Körper 16, der grundsätzlich die Gestalt einer Unterlegscheibe aufweist, für spezielle Anwendungen aber auch speziell gestaltet sein kann. Der ringförmige Körper 16 besitzt eine Achse 17 und eine in Richtung der Achse 17 durchgehende Bohrung 18. Der Durchmesser der Bohrung 18 ist auf den Außendurchmesser des Gewindeabschnitts 11 in der Weise abgestimmt, dass der Sicherungsring 3 auf den Schaft 10 des Schraubteils 2 angeordnet werden kann, wie dies im Endzustand Fig. 4 wiedergibt.

Der Sicherungsring 3 weist korrespondierend zu der Abstützfläche 7 des Schraubteils 2 eine Gegenabstützfläche 19 auf. Auf der anderen Seite, also dem nicht dargestellten Bauteil zugekehrt, besitzt der Körper 16 des Sicherungsrings 3 eine Anlagefläche 20, die hier kugelförmigen Umriss aufweist, so dass erkennbar wird, dass der Sicherungsring 3 zugleich eine Zentrierfunktion erfüllt. Der Sicherungsring 3 ist dabei in typischer Weise ausgebildet und das zusammengestellte Verbindungselement 1 dient damit insbesondere als Radschraube für die Befestigung von Rädern an Kraftfahrzeugen.

Die Gegenabstützfläche 19 weist eine Keilflächenverzahnung 21 mit Keilflächen 22 auf, die hier an Vorsprüngen vorgesehen sind und axial in Richtung auf die Abstützfläche 7 vorstehen. Die Neigung der Anordnung der Keilflächen 22 korrespondiert bzw. ist abgestimmt auf die Neigung der Keilflächen 9. Auch die Gegenabstützfläche 19 ist mit Anschlagflächen 23 und 24 versehen, die in Zuordnung zu den Anschlagflächen 14 und 15 an der Abstützfläche des Schraubteils 2 angeordnet sind. Auf diese Weise wird aus den Anschlagflächen 14 und 24 ein erstes Anschlagflächenpaar 14, 24 gebildet, welches bei Verdrehung des Schraubteils 2 in Festdrehrichtung 12 aneinander zur Anlage kommt bzw. in Wirkung tritt. Entsprechend bilden die Anschlagflächen 15 und 23 ein zweites Anschlagflächenpaar 15, 23, welches der Losdrehrichtung 13 zugeordnet ist. Beim Anziehen des Schraubteils 2 wird der Sicherungsring 3 über das erste Anschlagflächenpaar 14, 24 formschlüssig mitgenommen. Beim Lösen des Schraubteils 2 wird der Sicherungsring 3 von dem Schraubteil 2 in Losdrehrichtung 13 mitgenommen. Die Anschlagflächen der beiden Anschlagflächenpaare 14, 24 und 15, 23 sind, wie insbesondere aus Fig. 5 ersichtlich ist, unter Zulassung eines solchen Spiels in Drehrichtung zwischen Schraubteil 2 und Sicherungsring 3 angeordnet und platziert, dass die Keilflächen 9 und 22 sich begrenzt bewegen können. Das Schraubteil 2 ist relativ zu dem Sicherungsring 3 um einen begrenzten Winkel verdrehbar, bei dessen Durchschreiten die Keilfläche 9 auf der Keilfläche 22 aufgleitet. Zwischen den beiden Anschlagflächenpaaren wird also ein Aufgleitweg zugelassen, dessen Projektion auf eine senkrecht zur Achse 6 stehende Umfangsfläche einen bestimmten Verdrehwinkel zwischen Schraubteil 2 und Sicherungsring 3 entspricht. Während dieses Aufgleitvorgangs findet ein axiales Nachspannen des Schraubelementes 2, also eine Erhöhung der Axialkraft statt, wenn der Neigungswinkel der Keilflächen 9, 22 größer als die Steigung des Gewindes im Gewindeabschnitt 11 ist. Da sich das Aufgleiten zwischen den Anschlagflächenpaaren 14, 24 und 15, 23 abspielt, entspricht die Projektion des Aufgleitweges in die Umfangsfläche dem Spiel zwischen den Anschlagflächenpaaren.

Die in den Fig. 1-5 dargestellte Ausführungsform wird bevorzugt angewendet. Sie lässt sich relativ einfach herstellen, wobei wesentliche Herstellschritte durch Kaltumformung durchgeführt werden. Bei diesem Ausführungsbeispiel, wie auch bei allen anderen Ausführungsbeispielen, ist zur Verdeutlichung die axiale Erstreckung der Vertiefungen bzw. Erhöhungen, an denen die Keilflächen 9 und 22 sowie die Anschlagflächen 14, 15, 23 und 24 vorgesehen sind, übertrieben groß bzw. lang dargestellt.

Bei der Anwendung des Verbindungselementes 1 in der Ausführungsform der Fig. 1-5 wird der Sicherungsring 3 über den Schaft 10 des Schraubteils 2 aufgefädelt und das Schraubteil 2 mit dem Gewinde des Gewindeabschnitts 11 in das Bauteil eingeschraubt. Dabei befinden sich das Schraubteil 2 und der Sicherungsring 3 anfänglich in einer Relativlage, wie dies aus Fig. 5 hervorgeht. Während dieser Einschraubbewegung, d.h. vor oder nach dem Aufsetzen der Anlagefläche 20 an dem Bauteil, wird sich das Schraubteil 2 in Festdrehrichtung 12 relativ zum Sicherungsring 3 verdrehen, bis die Anschlagfläche 14 an der Anschlagfläche 24 zur Anlage kommt. Beim Verdrehen des Schraubteils 2 wird somit der Sicherungsring 3 in einer Drehbewegung um seine Achse 17 formschlüssig mitgenommen. Der Anziehvorgang des Verbindungselementes 1 wird dann beendet, wenn die erforderliche Axialkraft, mit der das Verbindungselement 1 angezogen werden soll, erreicht wird.

Infolge von auftretenden Belastungen und Kraftangriffen an dem Schraubteil 2 und/oder an dem Sicherungsring 3 kann sich eine Relativverdrehung des Schraubteils 2 in Losdrehrichtung 13 relativ zum Sicherungsring 3 einstellen. Hierbei gleiten die Keilflächen 9 auf den Keilflächen 22 auf und es ergibt sich die beabsichtigte Sicherungswirkung durch Erhöhung der Axialkraft. Die Relativbewegung des Schraubteils 2 zum Sicherungsring 3 in Losdrehrichtung 13 wird damit beendet. Es versteht sich, dass die Keilfläche 9 auf der Keilfläche 22 nur um einen relativ kleinen Weg aufgleitet. Dabei kann durchaus auch eine Relativlage zwischen Schraubteil 2 und Sicherungsring 3 erreicht werden, wie er in Fig. 5 dargestellt ist.

Bei einem gewollten Lösevorgang wird ein Drehmomentangriff an der Schlüsselfläche 5 in Losdrehrichtung 13 zur Einwirkung gebracht. Dabei ergeben sich verschiedene Relativbewegungen zwischen dem Schraubteil 2 und dem Sicherungsring 3. Es ist durchaus möglich, dass die Aufgleitbewegung fortgesetzt wird und zunächst eine weiter erhöhte Axialkraft das Losdrehen beeinträchtigt. Beim Losdrehvorgang wird sich jedoch auch der Gewindeabschnitt 11 im Bauteil verdrehen, wodurch die Axialkraft erniedrigt wird. Während dieses Losdrehvorgangs wird eine Relativlage zwischen Schraubteil 2 und Sicherungsring 3 erzielt, bei der die Anschlagfläche 15 des Schraubteils 2 an der Anschlagfläche 23 des Sicherungsrings 3 zur Anlage kommt. Sobald dies erreicht ist, wird der Sicherungsring durch das Verdrehen des Schraubteils 2 in Losdrehrichtung 13 formschlüssig mitgenommen, bis das Schraubteil 2 aus dem Bauteil herausgedreht ist. Es wird also ein Überspringen oder Überrasten der zahnartigen Vorsprünge mit den Keilflächen 9 bzw. 22 vermieden, wodurch das Verbindungselement wiederverwendbar wird. Besonders vorteilhaft ist es, wenn der Sicherungsring 3 über das Gewinde 11 unverlierbar auf dem Schraubteil 2 gehalten wird.

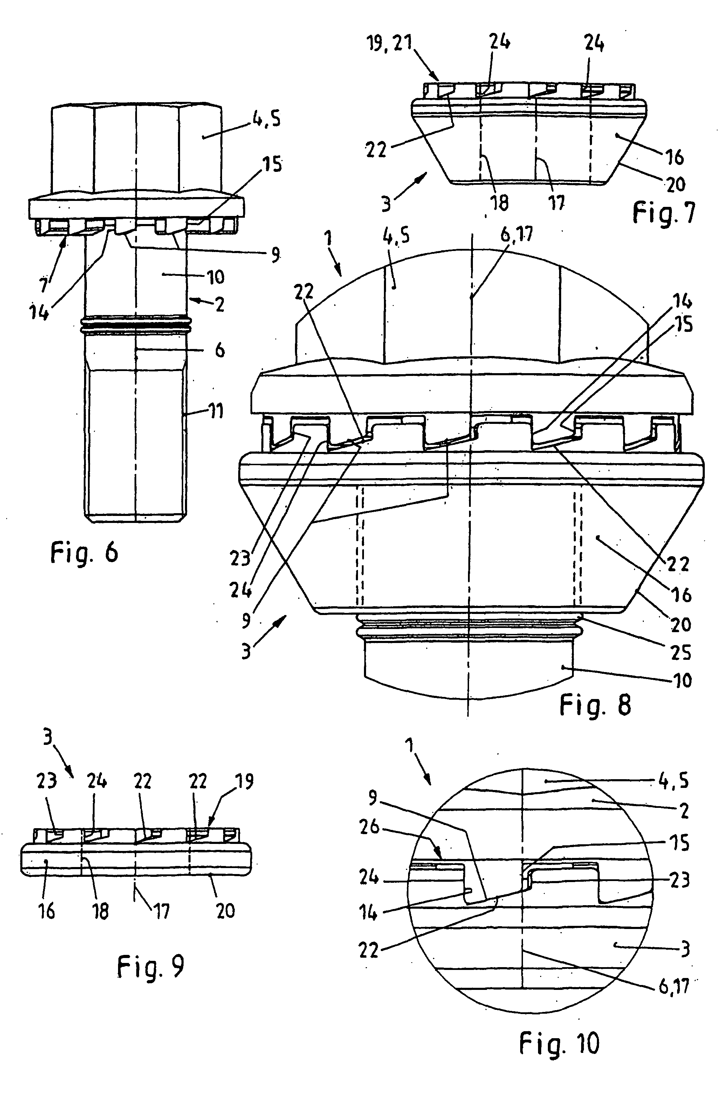

In den Fig. 6-8 ist eine zweite Ausführungsform des Verbindungselementes 1 dargestellt, bei dem sowohl das Schraubteil 2 wie auch der Sicherungsring 3 grundsätzlich ähnlich ausgebildet sind. Es kann diesbezüglich auf die Beschreibung des Ausführungsbeispiels der Fig. 1-5 hingewiesen werden. Neben den Gemeinsamkeiten bestehen folgende Unterschiede. Die Keilflächen 9 der ersten Keilflächenverzahnung 8 an dem Schraubteil 2 sind hier im Bereich von axialen Vorsprüngen in der Abstützfläche 7 des Schraubteils 2 verwirklicht, während umgekehrt die Keilflächen 22 der zweiten Keilflächenverzahnung 21 an dem Sicherungsring 3 im Grunde von Vertiefungen vorgesehen sind. Die relative Anordnung der Keilflächen 9 und 22 ist also diesbezüglich umgekehrt wie bei dem Ausführungsbeispiel der Fig. 1-5, wenngleich die Neigung und die relative Anordnung zur Drehrichtung mit dem Ausführungsbeispiel der Fig. 1 übereinstimmt.

Weiterhin weist der Sicherungsring 3 hier eine Anlagefläche 20 auf, die kegelförmig ausgebildet ist.

Weiterhin ist der Sicherungsring 3 an dem Schraubteil 2 unverlierbar festgelegt. Er ist nur begrenzt axial und auch nur begrenzt über einen entsprechenden Drehwinkel verdrehbar an dem Schraubteil 2 gelagert. Zu diesem Zweck wird der Sicherungsring 3 gemäß Fig. 7 nach seiner vollständigen Herstellung mit dem Schraubteil 2 zusammengefügt und es wird im Bereich des Schaftes 10 des Schraubteils beispielsweise durch einen Rollvorgang einen Wulst 25 durch Aufwölbung aufgerollt, deren nach dem Rollvorgang erreichter Außendurchmesser größer ist als der Durchmesser der Bohrung 18 des Sicherungsrings 3. Das zwischen der Abstützfläche 7 und der Gegenabstützfläche 19 verbleibende axiale Spiel ist geringer als es der axialen Überdeckung der Anschlagflächen 14, 15, 23, 24 und der Keilflächen 9 und 22 entspricht. Die Anschlagflächen 14, 24 und 15, 23 bilden gleichsam eine Klauenkupplung, so dass beim Auffädeln des Sicherungsrings 3 auf dem Schraubteil 2 gleichsam die eingerückte Stellung dieser Klauenkupplung erreicht und durch das Aufwölben des Wulstes 25 auch gesichert wird. Fig. 8 lässt die verbleibenden Bewegungsmöglichkeiten erkennen. Das Anziehen und das Lösen des Verbindungselementes geschieht in gleicher Weise, wie dies bei dem Ausführungsbeispiel der Fig. 1-5 bereits beschrieben wurde.

In Fig. 9 ist eine dritte Ausführungsform des Sicherungsrings 3 dargestellt, der hier einen flachen scheibenförmigen Körper 16 aufweist. Die Gegenabstützfläche 19 ist hier genau so ausgebildet wie bei dem Ausführungsbeispiel der Fig. 7. Demzufolge gehört zu diesem Sicherungsring 3 ein Schraubteil 2 gemäß Fig. 6. Auch hier besteht natürlich die Möglichkeit, den Sicherungsring 3 verliersicher an dem Schraubteil 2 anzuordnen. Fig. 10 zeigt eine Relativlage zwischen Schraubteil 2 und Sicherungsring 3, wie sie während des Anziehens des Schraubteils 2 und bei Erreichen der Endstellung vorliegt. Auch bei diesem Ausführungsbeispiel greifen Vorsprünge und Vertiefungen im Bereich der Abstützfläche 7 und der Gegenabstützfläche 19 nach Art einer Klauenkupplung 26 ineinander.

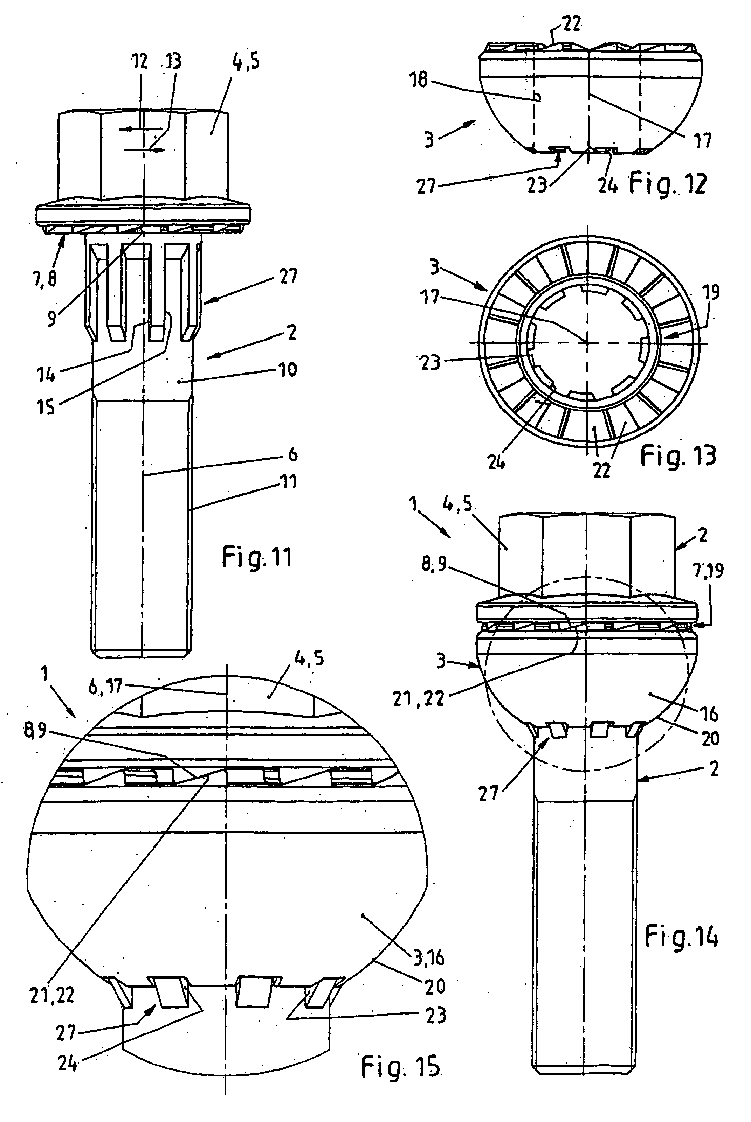

Bei den bisher beschriebenen Ausführungsbeispielen in den Fig. 1-10 waren sowohl die Keilflächen 9 bzw. 22 im Bereich der Abstützfläche 7 bzw. Gegenabstützfläche 19 vorgesehen. Da die Keilflächen 9, 22 der Sicherungswirkung durch axiales Nachspannen beim selbsttätigen Lösen dienen, müssen die Keilflächen 9 und 22 im Bereich der Abstützflächen 7 und 19 vorgesehen sein, also an Flächenbereichen, die im wesentlichen senkrecht auf den Achsen 6, 17 stehen. Bei den Ausführungsbeispielen der Fig. 1-10 sind auch die Anschlagflächenpaare 14, 24 und 15, 23 im Bereich der Abstützfläche 7 bzw. der Gegenabstützfläche 19 vorgesehen. Diese Anordnung an dieser Stelle ist jedoch nicht zwingend erforderlich. In den Fig. 11-15 ist ein Ausführungsbeispiel dargestellt, bei dem anstelle der zuvor beschriebenen Klauenkupplung 26 eine Keilwellenverzahnung 27 vorgesehen ist. Während die Keilflächen 9 der ersten Keilflächenverzahnung 8 an dem Schraubteil 2 im Bereich der Abstützfläche 7 angeordnet sind, ist die Keilwellenverzahnung 27 hier im Bereich des Schaftes 10 des Schraubteils 2 vorgesehen bzw. angeordnet. Die Keilwellenverzahnung 27 weist am Schraubteil 2 die Anschlagflächen 14 und 15 auf (Fig. 11). Entsprechend sind die Anschlagflächen 23 im Bereich der Keilwellenverzahnung 27 an dem Sicherungsring 3 im Bereich der Bohrung 18, also ebenfalls an einem sich axial erstreckenden Bereich angeordnet. Dies erbringt den Vorteil, dass die Keilflächenverzahnungen 8 und 21 örtlich getrennt und unabhängig voneinander an dem Schraubteil 2 und dem Sicherungsring 3 hergestellt werden können. Selbstverständlich muss die Relativanordnung zueinander abgestimmt werden. Auch diese abgestimmte Relativanordnung ist so ausgebildet, dass die Keilflächenverzahnungen 8, 21 nicht überrasten bzw. überspringen können, weil der Aufgleitweg durch die Anschlagflächenpaare 14, 24 und 15, 23 begrenzt ist.

Grundsätzlich besteht die Möglichkeit, die Keilflächen 9 und 22 als gewindeartig verlaufende Formflächen auszubilden, um die Flächenpressung gering zu halten. Es ist aber auch möglich, die Keilflächen 9 und/oder 22 als konvexe oder konkave Formflächen zu gestalten, um an ihnen eine unterschiedliche Folge von Tangentenwinkeln zu verwirklichen und so die Nachspannwirkung örtlich unterschiedlich zu gestalten.

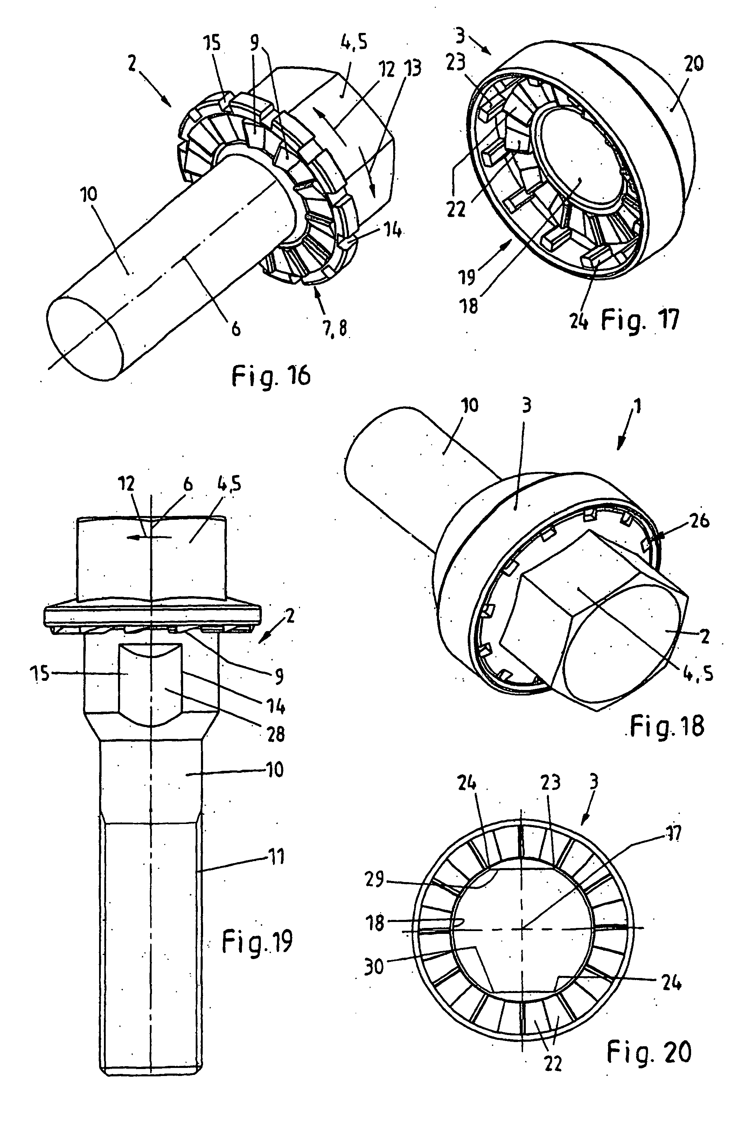

In den Fig. 16-18 ist in isometrischer Darstellung ein weiteres Ausführungsbeispiel des Verbindungselementes 1 aus dem Schraubteil 2 und dem Sicherungsring 3 dargestellt. Während bei den Ausführungsbeispielen der Fig. 1-10 die Keilflächen 9 und 22 und die Anschlagflächenpaare 14, 24 und 15, 23 tangential, also in Umfangsrichtung der Abstützfläche 7 und der Gegenabstützfläche 19 abwechselnd hintereinander geschaltet bzw. angeordnet waren, ist dies bei der Ausführungsform gemäß den Fig. 16-18 anders. Fig. 16 zeigt das Schraubteil 2, bei dem aus Vereinfachungsgründen am Schaft 10 der Gewindeabschnitt nicht dargestellt ist. Die Keilflächen 9 sind auf einem ersten kreisringförmigen Abschnitt der Abstützfläche 7 angeordnet, während die Anschlagflächen 14 und 15 auf einem weiteren Kreisringabschnitt mit vergleichsweise größerem Radius angeordnet sind. Die beiden Elemente sind also radial auseinander gezogen. Auch hier bilden die Anschlagflächenpaare 14, 24 und 15, 23 eine Klauenkupplung 26. Die aufeinander aufgleitenden Keilflächen 9 und 22 sind wiederum so angeordnet, wie dies vorher beschrieben wurde. Es versteht sich, dass auch bei diesem Ausführungsbeispiel eine verliersichere Lagerung des Sicherungsrings 3 an dem Schraubteil 2 verwirklicht werden kann.

Die Ausführungsform der Fig. 19 und 20 schließt grundsätzlich an die Ausführungsform der Fig. 6-15 an, d.h. die Anschlagflächenpaare sind hier ebenfalls in axialen Bereichen und damit örtlich getrennt von den Keilfächen 9 und 22 vorgesehen. Fig. 19 lässt erkennen, dass am Schraubteil 2 im Bereich des Schaftes 10 zwei über den Umfang verteilt angeordnete Abflachungen 28 angebracht sind, während, wie Fig. 20 zeigt, im Bereich der Bohrung 18 des Sicherungsrings 3 zwei radial nach innen vorspringende korrespondierende Vorsprünge 29 und 30 vorgesehen sind. Die Kanten bzw. entsprechende Flächenbereiche bilden die Anlageflächen 14 und 15 am Schraubteil 2 sowie 23 und 24 am Sicherungsring 3. Auch hier muss die relative Zuordnung so ausgestaltet sein, dass ein Überspringen oder Überrasten der Keilflächen 9 relativ zu den Keilflächen 22 verhindert wird.

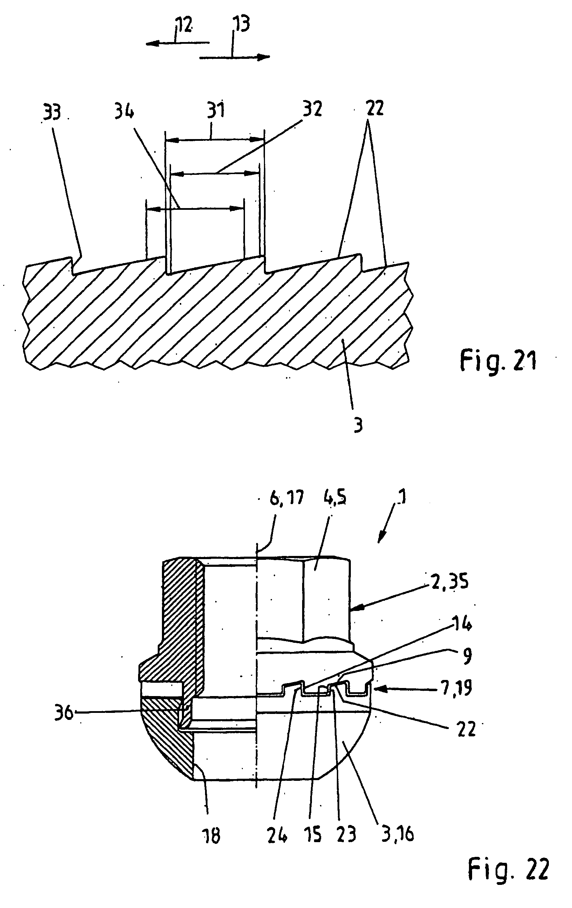

Fig. 21 verdeutlicht noch einmal grundsätzlich die Relativanordnung des Spiels der formschlüssigen Kupplung, insbesondere Klauenkupplung 26, zwischen dem Schraubteil 2 und dem Sicherungsring 3. Es ist hier eine Abwicklung des Sicherungsrings 3 mit der relativen Lage seiner Keilflächen 22 dargestellt. Die relative Lage der Festdrehrichtung 12 des Schraubteils 2 und seiner Losdrehrichtung 13 sind angegeben. Es ist ein Bereich für das Spiel 31 der Klauenkupplung 26 oder einer Keilwellenverzahnung 27 angegeben. Dieses Spiel 31 entspricht der Projektion der Keilfläche 22 auf die Gegenabstützfläche 19 und erstreckt sich damit in Umfangsrichtung vom Anfang der Keilfläche 22 bis zu deren Ende. Das Spiel in der Klauenkupplung 26 muss kleiner sein als das dargestellte Spiel 31, weil sonst ein Überspringen bzw. Überrasten der Keilflächen 9 relativ zu den Keilflächen 22 eintreten würde. Es ist ein zweites Spiel 32 dargestellt, welches eine vorteilhafte Lage bzw. Relativanordnung des Bewegungsspiels der Klauenkupplung 26 relativ zu der Erstreckung der Keilflächen 22 verdeutlicht. Es ist erkennbar, dass das Spiel 32 kleiner ist als das Spiel 31 und von beiden Endpunkten des Spiels 31 ein Abstand gewahrt ist. Damit ist sichergestellt, dass die zwischen den Keilflächen 22 angeordneten Schultern 33 ohne Wirkung sind und insoweit auch mit einer relativ großen zulässigen Toleranz hergestellt und angeordnet werden können. In vielen Fällen ist es möglich und sinnvoll, dass das Spiel 32 sogar wesentlich kleiner als das Spiel 31 gestaltet und angeordnet ist. Das Anziehen des Verbindungselementes und das Lösen desselben erfolgen ausschließlich über einen Formschluss an der Klauenkupplung bzw. den Anschlagflächenpaaren 14, 24 und 15, 23.

In Fig. 21 ist weiterhin ein Spiel 34 eingezeichnet, welches eine theoretisch mögliche Relativlage verdeutlichen soll. Bei dieser Relativanordnung erfolgt das Anziehen, also die formschlüssige Mitnahme des Sicherungsrings 3, über das Schraubteil 2 mit Hilfe der Schultern 33, die die Funktion des Anschlagflächenpaars 14, 24 übernehmen. Beim Lösen erfüllt die Klauenkupplung 26 mit ihrem Anschlagflächenpaar 15, 23 die formschlüssige Mitnahme des Sicherungsrings 3 in Losdrehrichtung 13. Die tatsächlich mögliche Relativverdrehung zwischen Schraubteil 2 und Sicherungsring 3 ist damit kleiner als das Spiel 34.

Fig. 22 verdeutlicht die Anwendung der Erfindung auf ein Verbindungselement, bei dem das Schraubteil 2 als Mutter 35 ausgebildet ist. Auch die Mutter 35 weist nunmehr die Abstützfläche 7 mit den Keilflächen 9 auf, während der Sicherungsring 3 die Keilflächen 22 trägt. Entsprechendes gilt für die Anschlagflächenpaare 14, 24 und 15, 23. Die Mutter 35 weist einen Kragen 36 auf, mit dessen Hilfe der Sicherungsring 3 unverlierbar mit der Mutter 35 verbunden ist.

### BEZUGSZEICHENLISTE

- 1 -: Verbindungselement
- 2 -: Schraubteil
- 3 -: Sicherungsring
- 4 -: Kopf
- 5 -: Schlüsselangriffsfläche
- 6 -: Achse
- 7 -: Abstützfläche
- 8 -: Keilflächenverzahnung
- 9 -: Keilfläche
- 10 -: Schaft
- 11 -: Gewindeabschnitt
- 12 -: Festdrehrichtung
- 13 -: Losdrehrichtung
- 14 -: Anschlagfläche
- 15 -: Anschlagfläche
- 16 -: Körper
- 17 -: Achse
- 18 -: Bohrung
- 19 -: Gegenabstützfläche
- 20 -: Anlagefläche
- 21 -: Keilflächenverzahnung
- 22 -: Keilfläche
- 23 -: Anschlagfläche
- 24 -: Anschlagfläche
- 25 -: Wulst
- 26 -: Klauenkupplung
- 27 -: Keilwellenverzahnung
- 28 -: Abflachung
- 29 -: Vorsprung
- 30 -: Vorsprung
- 31 -: Spiel
- 32 -: Spiel
- 33 -: Schulter
- 34 -: Spiel
- 35 -: Mutter
- 36 -: Kragen

## Patentansprüche

1. Lösbares Verbindungselement (1) für ein Bauteil, mit einem Schraubteil (2) und einem Sicherungsring (3), wobei das Schraubteil (2) eine Schlüsselangriffsfläche (5), einen Gewindeabschnitt (11) und eine Abstützfläche (7) zur Übertragung einer Axialkraft auf den Sicherungsring (3) aufweist, der Sicherungsring (3) eine Gegenabstützfläche (19) und eine Anlagefläche (20) für die Übertragung der Axialkraft auf das Bauteil besitzt und das Schraubteil (2) auf seiner dem Sicherungsring (3) zugekehrten Abstützfläche (7) eine erste Keilflächenverzahnung (8) und der Sicherungsring (3) auf der dem Schraubteil (2) zugekehrten Gegenabstützfläche (19) eine korrespondierende zweite Keilflächenverzahnung (21) aufweisen, die Aufgleitflächen bilden und in Losdrehrichtung (13) unter Erhöhung der Axialkraft in dem Verbindungselement (1) aufeinander aufgleiten, wobei zwischen Schraubteil (2) und Sicherungsring (3) ein erstes Anschlagflächenpaar (14, 24) zur Drehmomentübertragung in Festdrehrichtung (12) vorgesehen ist, **dadurch gekennzeichnet, dass** zwischen Schraubteil (2) und Sicherungsring (3) ein zweites Anschlagflächenpaar (15, 23) zur Drehmomentübertragung in Losdrehrichtung (13) vorgesehen ist, und dass die Anschlagflächenpaare (14, 24; 15, 23) mit Spiel zueinander so positioniert sind, dass zwischen ihnen das Aufgleiten über die Keilflächenverzahnungen (8, 21) ohne Überrasten der Keilflächenverzahnungen ermöglicht wird.

2. Verbindungselement nach Anspruch 1, **dadurch gekennzeichnet, dass** die beiden Keilflächenverzahnungen (8, 21) so ausgebildet und angeordnet sind, dass bei Krafteinwirkung auf das Schraubteil (2) in Losdrehrichtung (13) des Verbindungselementes (1) zwischen Schraubteil (2) und Sicherungsring (3) eine dem selbsttätigen Lösen entgegengerichtete Sicherungswirkung entsteht, wobei das Schraubteil (2) und der Sicherungsring (3) unter Erhöhung der Axialkraft begrenzt auseinandergedreht werden, während beim Anziehen des Schraubteils und beim Losdrehen des Schraubteils die jeweiligen Anschlagflächenpaare (14, 24; 15, 23) zwischen Schraubteil (2) und Sicherungsring (3) Formschluss haben.

3. Verbindungselement nach Anspruch 1 oder 2, **dadurch gekennzeichnet, dass** die Anschlagflächenpaare (14, 24; 15, 23) in Form einer Klauenkupplung (26) oder einer Keilwellenverzahnung (27) ausgebildet sind.

4. Verbindungselement nach einem der Ansprüche 1 bis 3, **dadurch gekennzeichnet, dass** die eingerückte Relativlage durch eine unverlierbare und auf das Spiel begrenzte drehbare Lagerung des Sicherungsrings (3) an dem Schraubteil (2) gesichert ist.

5. Verbindungselement nach einem der Ansprüche 1 bis 4, **dadurch gekennzeichnet, dass** das Spiel zwischen den Anschlagflächenpaaren (14, 24; 15, 23) kleiner als die Projektion der Keilflächenverzahnungen (8, 21) bemessen ist und dass die Anschlagflächenpaare (14, 24; 15, 23) so relativ zu den Keilflächenverzahnungen (8, 21) angeordnet sind, dass das Spiel innerhalb der Projektion einer Keilfläche (9; 22) liegt.

6. Verbindungselement nach einem der Ansprüche 1 bis 4, **dadurch gekennzeichnet, dass** das Spiel zwischen den Anschlagflächenpaaren (14, 24; 15, 23) gleich oder größer als die Projektion der Keilflächenverzahnungen (8, 21) bemessen ist und dass die Anschlagflächenpaare (14, 24; 15, 23) so relativ zu den Keilflächenverzahnungen (8, 21) angeordnet sind, dass das Spiel außerhalb der Projektion einer Keilfläche (9; 21) liegt.

7. Verbindungselement nach einem der Ansprüche 1 bis 6, **dadurch gekennzeichnet, dass** die Keilflächenverzahnungen (8, 21) nicht-ebene Formflächen aufweisen und der wirksame Tangentenwinkel der in Losdrehrichtung (13) des Schraubteils (2) miteinander in Kontakt kommenden Formflächen der Keilflächenverzahnungen (8, 21) nur geringfügig größer als der Steigungswinkel des Gewindeabschnitts (11) bemessen ist.

8. Verbindungselement nach einem der Ansprüche 1 bis 7, **dadurch gekennzeichnet, dass** die Anschlagflächen der Anschlagflächenpaare (14, 24; 15, 23) auf Bereichen der Abstützfläche (7) und der Gegenabstützfläche (19) oder auf sich axial erstreckenden Bereichen des Schraubteils (2) und des Sicherungsrings (3) angeordnet sind.

9. Verbindungselement nach einem der Ansprüche 1 bis 8, **dadurch gekennzeichnet, dass** die Anschlagflächenpaare (14, 24; 15, 23) und die Keilflächenverzahnungen (8, 21) auf der Abstützfläche (7) des Schraubteils (2) und der Gegenabstützfläche (19) des Sicherungsrings (3) über den Umfang gleichmäßig verteilt angeordnet sind.

10. Verbindungselement nach einem oder mehreren der Ansprüche 1 bis 9, **dadurch gekennzeichnet, dass** die zur Erreichung des Aufgleitens in Losdrehrichtung (13) miteinander in Kontakt kommenden Formflächen als nicht-ebene, gewindeartig verlaufende Formflächen ausgebildet sind.

## Claims

1. Releasable fastener (1) for a component, comprising a screw element (2) including an engagement surface (5), a threaded portion (11), a supporting surface (7) being designed and arranged to transmit an axial force onto the securing ring (3), the securing ring (3) including a counter supporting surface (19) and a counter engagement surface (20) being designed and arranged to transmit an axial force onto the component, the screw element (2) including a first wedge-shaped surface tooth arrangement (8) being arranged at the supporting surface (7) and the securing ring (3) including a corresponding second wedge-shaped surface tooth arrangement (21) being arranged at the counter supporting surface (19) facing the screw element (2), the first and second wedge-shaped surface tooth arrangements (8, 21) being designed and arranged to face one another and to form sliding surfaces sliding upon one another in a loosening direction of rotation (13) resulting in an increase of the axial force, a first pair of stop surfaces (14, 24) being arranged between the screw element (2) and the securing ring (3) and being designed and arranged to transmit torque in a tightening direction of rotation (12), **characterized in that** a second pair of stop surfaces (15, 23) is arranged between the screw element (2) and the securing ring (3) and being designed and arranged to transmit torque in the loosening direction of rotation (13), and that the stop surfaces of the pairs of stop surfaces (14, 24; 15, 23) being designed and arranged with a clearance between one another such that the first and second wedge-shaped surface tooth arrangements (8, 21) can slide upon one another without skipping.

2. Fastener of claim 1, **characterized in that** the first and second wedge-shaped surface tooth arrangements (8, 21) are designed and arranged such that there is a securing effect counteracting undesired loosening of the fastener (1) when forces act upon the screw element (2) in the loosening direction of rotation (13), the screw element (2) and the securing ring (3) being rotated with respect to one another to a limited extent under an increase of the axial force, while the stop surfaces of the first or second pairs of stop surfaces (14, 24; 15, 23) respectively between the screw element (2) and the securing ring (3) are designed and arranged to positively engage one another when tightening or loosening the screw element.

3. Fastener of claim 1 or 2, **characterized in that** the first and second pairs of stop surfaces (14, 24; 15, 23) are designed as a claw clutch (26) or as a spline shaft tooth arrangement (27).

4. Fastener of one of the claims 1 to 3, **characterized in that** the securing ring (3) is captively connected to the screw element (2) in the meshing position in a way to limit a rotational movement of the screw element (2) and the securing ring (3) with respect to one another to the clearance.

5. Fastener of one of the claims 1 to 4, **characterized in that** the clearance existing between the pairs of stop surfaces (14, 24; 15, 23) is less than a projection of the wedge-shaped surface tooth arrangements (8, 21), and that the pairs of stop surfaces (14, 24; 15, 23) are arranged with respect to the wedge-shaped surface tooth arrangements (8, 21) such that the clearance is located within the projection of one wedge-shaped surface (9; 22).

6. Fastener of one of the claims 1 to 4, **characterized in that** the clearance existing between the pairs of stop surfaces (14, 24; 15, 23) is equal or greater than a projection of the wedge-shaped surface tooth arrangements (8, 21), and that the pairs of stop surfaces (14, 24; 15, 23) are arranged with respect to the wedge-shaped surface tooth arrangements (8, 21) such that the clearance is located outside of the projection of one wedge-shaped surface (9; 22).

7. Fastener of one of the claims 1 to 6, **characterized in that** the wedge-shaped surface tooth arrangements (8, 21) each include a number of wedge-shaped uneven form surfaces, and that the effective pitch of the uneven form surfaces being designed and arranged to contact one another in the loosening direction of rotation (13) is slightly greater than the pitch of the threaded portion (11).

8. Fastener of one of the claims 1 to 7, **characterized in that** the stop surfaces of the pairs of stop surfaces (14, 24; 15, 23) arranged at regions of the supporting surface (7) and the counter supporting surface (19) or at portions of the screw element (2) and the securing ring (3) extending in an axial direction.

9. Fastener of one of the claims 1 to 8, **characterized in that** the pairs of stop surfaces (14, 24; 15, 23) and the wedge-shaped surface tooth arrangements (8, 21) are arranged at the supporting surface (7) of the screw element (2) and at the counter supporting surface (19) of the securing ring (3) in a uniformly spaced apart manner about the circumference.

10. Fastener of one or more of the claims 1 to 9, **characterized in that** the form surfaces being designed and arranged to contact one another in the loosening direction of rotation (13) to slide upon one another are designed and arranged to be uneven screw-like form surfaces.

## Revendications

1. Elément de liaison (1) séparable pour élément de construction, comportant une partie filetée (2) et un jonc d'arrêt (3), la partie filetée (2) présentant une surface de prise de clé (5), un tronçon fileté (11) et une surface d'appui (7) pour transmettre une force axiale au jonc d'arrêt (3), le jonc d'arrêt (3) possédant une contre-surface d'appui (19) et une surface de contact (20) pour la transmission de la force axiale à l'élément de construction, et la partie filetée (2) présentant sur sa surface d'appui (7) tournée vers le jonc d'arrêt (3) une première denture à surfaces en coin (8), et le jonc d'arrêt (3) présentant sur la contre-surface d'appui (19) tournée vers la partie filetée (2) une deuxième denture à surfaces en coin (21) correspondante qui forment des surfaces de glissement et glissent l'une sur l'autre dans l'élément de liaison (1) avec augmentation de la force axiale, une première paire de surfaces de butée (14, 24) étant prévue entre la partie filetée (2) et le jonc d'arrêt (3) pour transmettre le couple de rotation dans le sens du serrage (12), **caractérisé en ce qu'**il est prévu, entre la partie filetée (2) et le jonc d'arrêt (3), une deuxième paire de surfaces de butée (15, 23) pour la transmission du couple de rotation dans le sens du desserrage (13), et **en ce que** les paires de surfaces de butée (14, 24; 15, 23) sont positionnées avec jeu l'une par rapport à l'autre de manière à permettre entre elles le glissement sur les dentures à surfaces en coin (8, 21), sans sauter des crans des dentures à surfaces en coin.

2. Elément de liaison selon la revendication 1, **caractérisé en ce que** les deux dentures à surfaces en coin (8, 21) sont conçues et disposées de manière que lorsqu'une force agit sur la partie filetée (2) dans le sens du desserrage (13) de l'élément de liaison (1), il se produit entre la partie filetée (2) et le jonc d'arrêt (3) un effet de blocage opposé au desserrage automatique, la partie filetée (2) et le jonc d'arrêt (3) étant écartés par rotation l'un de l'autre dans une mesure limitée avec augmentation de la force axiale, tandis que lorsque l'on serre et desserre la partie filetée par rotation, les paires de surfaces de butée (14, 24; 15, 23) respectives ont une liaison par complémentarité de formes entre la partie filetée (2) et le jonc d'arrêt (3).

3. Elément de liaison selon la revendication 1 ou 2, **caractérisé en ce que** les paires de surfaces de butée (14, 24; 15, 23) sont réalisées sous la forme d'un accouplement à griffes (26) ou d'une denture d'arbre cannelé (27).

4. Elément de liaison selon l'une des revendications 1 à 3, **caractérisé en ce que** la position relative engagée est bloquée par un support imperdable et pouvant tourner de manière limitée au jeu du jonc d'arrêt (3) sur la partie filetée (2).

5. Elément de liaison selon l'une des revendications 1 à 4, **caractérisé en ce que** le jeu entre les paires de surfaces de butée (14, 24; 15, 23) est inférieur à la projection des dentures à surfaces en coin (8, 21), et **en ce que** les paires de surfaces de butée (14, 24; 15, 23) sont disposées par rapport aux dentures à surfaces en coin (8, 21) de manière que le jeu se situe à l'intérieur de la projection d'une surface en coin (9; 22).

6. Elément de liaison selon l'une des revendications 1 à 4, **caractérisé en ce que** le jeu entre les paires de surfaces de butée (14, 24; 15, 23) est égal ou supérieur à la projection des dentures à surfaces en coin (8, 21), et **en ce que** les paires de surfaces de butée (14, 24; 15, 23) sont disposées par rapport aux dentures à surfaces en coin (8, 21) de manière que le jeu se situe à l'extérieur de la projection d'une surface en coin (9; 21).

7. Elément de liaison selon l'une des revendications 1 à 6, **caractérisé en ce que** les dentures à surfaces en coin (8, 21) présentent des surfaces de forme non plane et l'angle tangentiel utile des surfaces profilées venant en contact entre elles dans le sens de desserrage (13) de la partie filetée (2), des dentures à surfaces en coin (8, 21), n'est dimensionné que légèrement supérieur au pas du tronçon fileté (11).

8. Elément de liaison selon l'une des revendications 1 à 7, **caractérisé en ce que** les surfaces de butée des paires de surfaces de butée (14, 24; 15, 23) sont disposées sur des zones de la surface d'appui (7) et de la contre-surface d'appui (19) ou sur des zones s'étendant axialement de la partie filetée (2) et du jonc d'arrêt (3).

9. Elément de liaison selon l'une des revendications 1 à 8, **caractérisé en ce que** les paires de surfaces de butée (14, 24; 15, 23) et les dentures à surfaces en coin (8, 21) sont disposées régulièrement réparties sur le pourtour de la surface d'appui (7) de la partie filetée (2) et de la contre-surface d'appui (19) du jonc d'arrêt (3).

10. Elément de liaison selon une ou plusieurs des revendications 1 à 9, **caractérisé en ce que** les surfaces profilées venant en contact entre elles pour obtenir le glissement dans le sens de desserrage (13), sont réalisées comme des surfaces profilées non planes, s'étendant à la manière d'un filetage.
